Europäisches Patentamt

European Patent Office

Office européen des brevets

(11) Publication number : **0 463 855 A2**

# EUROPEAN PATENT APPLICATION

(21) Application number : **91305732.9**

(51) Int. Cl.⁵ : **G06F 9/30**, G06F 9/34

(22) Date of filing : **25.06.91**

(30) Priority : **25.06.90 JP 165911/90**

(43) Date of publication of application :
**02.01.92 Bulletin 92/01**

(84) Designated Contracting States :
**DE FR GB IT**

(71) Applicant : **NEC CORPORATION**
**7-1, Shiba 5-chome Minato-ku**
**Tokyo 108-01 (JP)**

(72) Inventor : **Fujimura, Sayuri, c/o NEC**
**Corporation**
**7-1, Shiba 5-chome**
**Minato-ku, Tokyo (JP)**

(74) Representative : **Garratt, Peter Douglas et al**
**Mathys & Squire 10 Fleet Street**
**London EC4Y 1AY (GB)**

(54) **Microcomputer.**

(57)   A microcomputer includes a plurality of memory bank select registers (5,6,7,8) which expand a memory area to a plurality of memory banks ("0","1","2","3") and which select one memory bank from the plurality of memory banks ; a plurality of register banks (1,2,3,4) each being formed by a plurality of general purpose registers ; and a register bank select register (9) which selects one register bank from the plurality of register banks. The number of the memory bank select registers is the same as that of the register banks and the register bank select register is both for selecting one of the register banks and for selecting one of the memory bank select registers. The memory banks can be switched only by changing the contents of the register bank select register so that, when there occurs an interruption, or when a call instruction is executed, the operations required are only saving the current contents of the register bank select register, setting the register bank select register to be used in a subroutine, and restoring the register bank register to be used in the main routine. As a result, the number of program steps can be reduced, and when an operation is repeated a number of times in a wide range of addresses, data processing time can be reduced by the memory bank switching operation.

EP 0 463 855 A2

The present invention relates to a microcomputer and, more particularly, to a microcomputer having a memory bank configuration and a register bank configuration.

A conventional microcomputer of the type to which the present invention relates has a plurality of memory bank configurations, wherein a certain memory capacity is a unit thereby to allow expansion of data memory, and a selection of a memory bank is effected with a memory bank select register. Also such type of microcomputer has a plurality of register bank configurations, wherein a plurality of general purpose registers constitute a unit, to enhance performance of the register in execution of an interruption processing or a subroutine processing and a selection of a register bank is effected with one register bank select register. In the conventional memory bank control method and the register bank control method of the prior art, the various operations involved require frequent switching of such memory banks and register banks resulting in the need of an increased number of program steps and of an increased time for data processing. Such a conventional register bank select circuit and a conventional memory bank select circuit as well as problems existing therein are fully explained later before embodiments according to the present invention are described.

It is, therefore, an object of the present invention to overcome problems existing in the conventional microcomputer and to provide an improved microcomputer.

Another object of the present invention is to provide a microcomputer in which the number of program steps can be decreased and the time required for data processing can be decreased.

In accordance with one aspect of the invention, there is provided a microcomputer which comprises:

a plurality of memory bank select registers which expand a memory area to a plurality of memory banks and which select one memory bank from the plurality of memory banks;

a plurality of register banks each being formed by a plurality of general purpose registers; and

a register bank select register which selects one register bank from the plurality of register banks,

the memory bank select registers being the same in number as that of the register banks, and the register bank select register being both for selecting one register bank from the plurality of register banks and for selecting one memory bank select register from the plurality of memory bank select registers.

In another form, a microcomputer according to this invention includes a control means for validating or invalidating selection of the memory bank select registers.

The above and other objects, features and advantages of the present invention will be apparent from the following description of preferred embodiments of the invention explained with reference to the accompanying drawings, in which:-

Fig. 1 is a block diagram showing an example of the prior art.

Fig. 2 is a diagram showing a data memory allocation;

Fig. 3 is a block diagram showing a first embodiment of the present invention; and

Fig. 4 is a block diagram showing a second embodiment of the present invention.

Throughout the following explanation, similar reference symbols or numerals refer to the same or similar elements in all figures of the drawings.

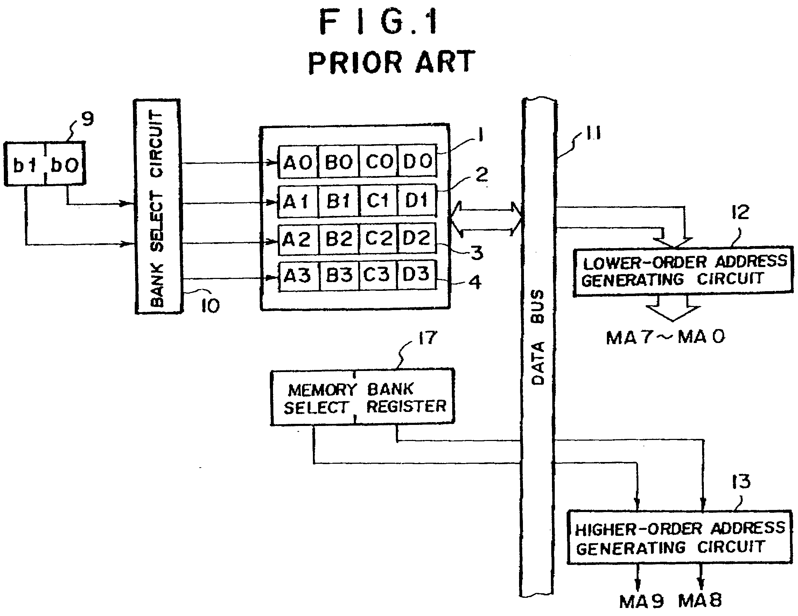

For the purpose of assisting in the understanding of the present invention, description is made hereunder first for a conventional register bank select circuit and a conventional memory bank select circuit with reference to Fig. 1. A 4-bit microcomputer is used as an example of the prior art.

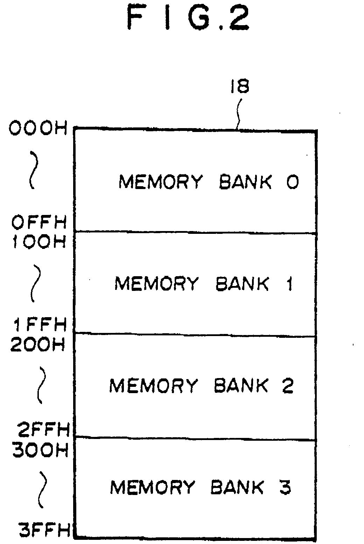

Fig. 2 shows an allocation of a conventional data memory. A data memory 18 has a capacity of 1024 x 4 bits, and comprises four memory banks (memory banks "0" to "3") wherein 256 x 4 bits are one unit.

The register bank select circuit and the memory bank Select circuit in the conventional microcomputer shown in Fig. 1 comprise a register bank (#a) 1, a register bank (#b) 2, a register bank (#c) 3, a register bank (#d) 4, a memory bank select register 17, a register bank select register 9, a bank select circuit 10, a data bus 11, a lower-order address generating circuit 12, a higher-order address generating circuit 13, and a central processing section (not shown). The central processing section sets data in the register bank (#a) 1, the register bank (#b) 2, the register bank (#c) 3, the register bank (#d) 4, the memory bank select register 17, and the register bank select register 9 through the data bus 11. The register bank select register 9 is a register which selects a register bank to be used and the contents of the register bank select register 9 are decoded in the bank select circuit 10. If the contents of the register bank select register 9 are "00", the register bank (#a) 1 is selected, if "01", the register bank (#b) 2 is selected, if "10", the register bank (#c) 3 is selected, and if "11", the register bank (#d) 4 is selected. The register bank (#a) 1 comprises 4 pieces of 4-bit configuration registers, A0, B0, C0, and D0. The register bank (#b) 2 comprises 4 pieces of 4-bit configuration registers, A1, B1, C1, and D1. The register bank (#c) 3 comprises 4 pieces of 4-bit configuration registers, A2, B2, C2, and D2. The register bank (#d) 4 comprises 4 pieces of 4-bit configuration registers, A3, B3, C3, and D3. Each pair of the register A0 and the register B0, the register A1 and the register B1, the register A2 and the register B2, and the register A3 arid the register B3 forms an indirect addressing register, and each pair of the register C0 and the register D0, the register C1 and the register D1, the register C2 and the register D2, and the register C3 and the register D3 forms an indirect addressing register. The lower-order address generating circuit 12 is an address generating circuit which outputs an address specified by a direct addressing instruction and the contents of the indirect addressing register specified by an indirect addressing instruction as lower-order 8 bits MA7 $\sim$ MA0 of the memory address. The higher-order address generating circuit 13 is an address generating circuit which outputs the contents of the memory bank select register 17 specified by the register bank select register 9 as higher-order 2 bits MA9, MA8 of the memory address. The memory bank select register 17 is a 2-bit register which selects one of the memory banks "0 to "3" to be used according to the contents thereof. Description is made below for a method for selection of a memory bank and a method for selection of a register banks when an interruption request is issued in a microcomputer using a conventional bank selection method.

In the main routine, the register bank (#a) 1 is selected by having "00" set in the register bank select register 9 and a processing is performed by having "00" set in the memory bank select register 17 with the memory bank "0" being selected as an access memory area, For instance, when the data "06H" and "0CH" are set in the registers A0 and B0 of the register bank (#a) 1, respectively, and an indirect addressing instruction of these registers A0 and B0 is executed, the higher-order address generating circuit 13 outputs MA9, MA8 = 00, while the lower-order address generating circuit 12 outputs MA7 $\sim$ MA0 = 01101100, thus access to a memory address "06CH" being enabled.

Next, description is made hereunder for a processing when a request for interruption is issued.

When the processing is branched to an interruption processing routine upon the occurrence of a request for interruption, the current contents of the register bank select register 9 and also the memory bank select register 17 are stored in a stack area by the execution of a PUSH command. Then, a register bank and a memory bank to be used in the interruption processing routine are selected. Here, the register bank (#b) 2 is selected by having "01" set in the register bank select register 9 and a processing is performed by having "11" set in the memory bank select register 17 with the memory bank "3" being selected as an access memory area. For instance, if the data "06H" and "0CH" are set in the registers A1 and B1 of the register bank (#b) 2, respectively, and an indirect addressing instruction of the registers A1 and B1 is executed, the higher-order address generating circuit 13 outputs MA9, MA8 = 11, while the lower-order address generating circuit 12 outputs MA7 $\sim$ MA0 = 01101100, thus access to the memory address "36CH" being enabled. At the end of the interruption processing routine, information of the register bank and the memory bank to be used in the main routine, which has been stored in the stack area, is restored in accordance with a POP command.

As described above, in the prior art, when an interruption processing is to be effected, it is necessary to save two bank-information having been set in a main routine and set two bank-information to be set in the interruption processing routine, and to restore the two bank-information set in the main routine again at the end of the interruption processing routine.

As described above, the memory bank control method and the register bank control method of the prior art are such that, when an interruption as described above is effected, or when it is frequent to carry out data transactions and data comparison between memory banks, and to execute a call instruction, such operations also require frequent switching of memory banks and register banks. For this purpose, the necessary number of program steps also increases, and even if the steps are grouped to subroutines, when operations like the aforementioned ones are repeated a number of times in a wide range of addresses, the time required for data processing increases because of the memory bank switching operation, which has been a disadvantage in the prior art.

The microcomputer according to this invention has register bank select register which selects one register bank from a plurality of register banks and a plurality of memory bank select registers whose number is the same as that of the register banks. The register bank select register is both for selecting one register bank from the plurality of register banks and for selecting one memory bank select register from the plurality of memory bank select registers.

Now, embodiments according to the invention are explained hereunder with reference to the appended drawings.

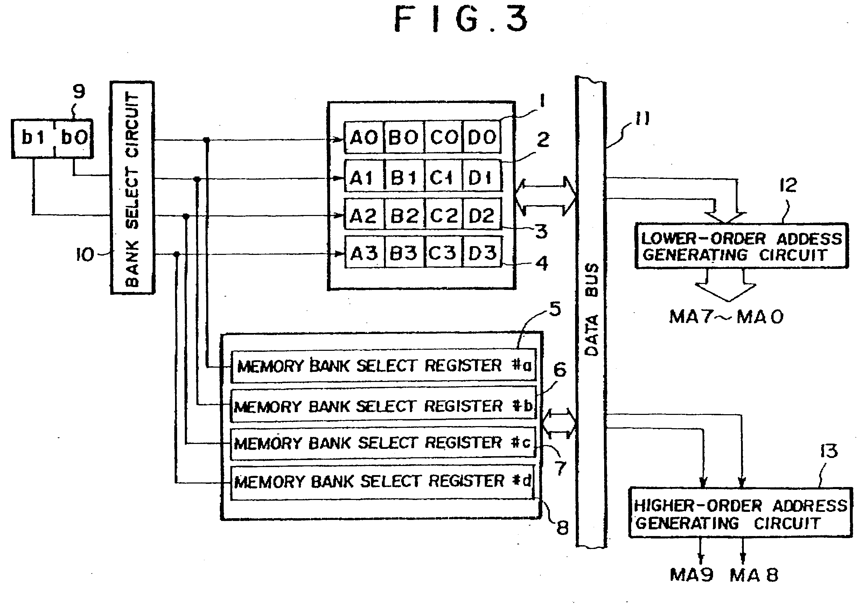

Fig. 3 is a block diagram showing a first embodiment of the invention.

In the first embodiment, the register bank (#a) 1, the register bank (#b) 2, the register bank (#c) 3, the register bank (#d) 4, the bank select circuit 10, the data bus 11, the lower-order address generating circuit 12, and the central processing unit (not shown) are the same as those in the example of the prior art explained above, so that detailed description thereof is not repeated here. The data memory allocation is the same as that in the example of the prior art, and is shown in Fig. 2. The register bank select register 9 is a register which selects a register bank and a memory bank select register to be used and the contents of this register bank select register 9 are decoded in the bank select circuit 10. If the contents of the register bank select register 9 is "00", the register bank (#a) 1 and the memory bank select register (#a) 5 are selected, if the contents of the register bank select register 9 are "01", the register bank (#b) 2 and the memory bank select register (#b) 6 are selected, if the contents of the register bank select rebister 9 are "10", the register bank (#c) 3 and the memory bank select register (#c) 7 are selected, and if the contents of the register bank select register 9 are "11", the register bank (#d) 4 and the memory bank select register (#d) 8 are selected. The higher-order address generating circuit 13 is an address generating circuit which outputs contents of a memory bank select register #n (n being a, b, c or d) selected by the register bank select register 9 as higher-order 2 bits MA9 and MA8 of the memory address. The memory bank select register (#a) 5, the memory bank select register (#b) 6, the memory bank select register (#c) 7, and the memory bank select register (#d) 8 are 2-bit registers respectively, which select one of the memory banks "0" to "3" to be used according to the contents.

Detailed description is made below for a method for selecting a memory bank and a register bank when there occurs a request for interruption. In the initial setting, "00", "11", "10" and "11" are set in the memory bank select register (#a) 5, the memory bank select register (#b) 6, the memory bank select register (#c) 7, and the memory bank select register (#d) 8, respectively. At first, in the main routine, "00" is set in the register bank select register 9, and processing is performed by specifying the memory bank "0" as an access memory area since the contents of the register bank (#a) 1 and the contents of the memory bank select register (#a) 5 are "00". For instance, if the data "06H" and "0CH" are set in the registers A0 and B0 of the register bank (#a) 1, respectively, and an indirect addressing instruction of these registers A0 and B0 is executed, the higher-order address generating circuit 13 outputs MA9, MA8 = 00, while the lower-order address generating circuit 12 outputs MA7 $\sim$ MA0 = 01101100, thus access to the memory address "06CH" being enabled.

Next, description is made below for a processing when there occurs a request for interruption.

When the processing is branched to an interruption processing routine upon the occurrence of a request for interruption, the current contents of the register bank select register 9 are stored in the stack area according to the PUSH command. Then, a register bank to be used in the interruption processing routine is selected. Here, "01" is set in the register bank select register 9 and, since the contents of the register bank (#b) 2 and the contents of the memory bank select register (#b) 6 are "11", processing is performed with the memory bank "3" being selected as the access memory area. For instance, if the data "06H" and "0CH" are set in the registers A1 and B1 of the register bank (#b) 2, respectively, and an indirect addressing instruction of these registers A1 and B1 is executed, the higher-order address generating circuit 13 outputs MA9, MA8 = 11, while the lower address generating circuit 12 outputs MA7 $\sim$ MA0 = 01101100, thus access to the memory address "36CH" being enabled. At the end of the interruption processing routine, information on the register bank to be used in the main routine which had been stored in the stack area is restored.

Thus, according to the present invention, as described in connection with the first embodiment, switching of the information as to a register bank to be used and switching of the information as to a memory bank to be used can be performed only by changing the contents of the register bank select register 9. Also, if the register bank select register 9 is mapped in a program status word (hereinafter referred to as "PSW") constituted by processor operation status flags, the PSW being automatically saved in the stack area when the processing branches to an interruption processing subroutine, a register bank and a memory to be used in the interruption processing routine can be selected only by having data set once in the register bank select register 9 when there occurs an interruption request, and saving and restoring the information on a register bank and a memory bank to be used in the main routine are not necessary.

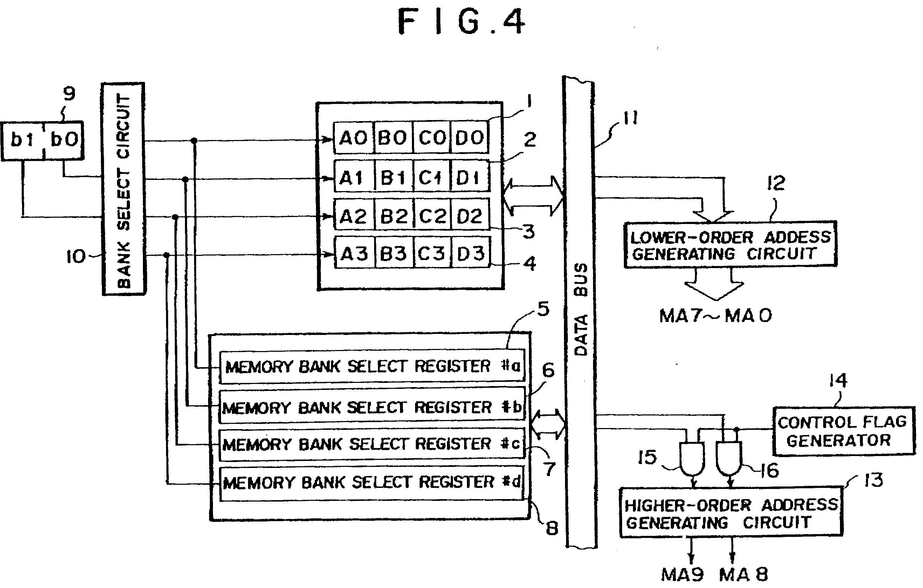

Next, description is made below for a second embodiment according to the invention with reference to Fig. 4. first, description is made for the respective components. In the second embodiment, a control flag generator 14 is added to a configuration of the first embodiment. The control flag generator 14 operates to control whether the contents of a memory bank select register selected by the register bank select register 9 are validated or invalidated. Specifically, when the content of the control flag generator 14 is "0", the contents of the selected memory bank select register are invalidated, and the higher-order address generating circuit 13 outputs MA9, MA8 = 00, and the memory bank "0" is selected. On the other hand, when the content of the control flag generator 14 is "1", the contents of the selected memory bank select register are validated, and the higher-order address generating circuit 13 outputs the contents of the selected memory bank select register.

Next, description is made for operations of the second embodiment. The description is precised on the execution of a processing routine to make comparison between the contents at a particular address in the memory bank "3" and the contents at a particular address in the memory bank "0". In the initial setting, the data "00", "11", "10" and "11" are set in the memory bank select register (#a) 5, the memory bank select register (#b) 6, the memory bank select register (#c) 7, and the memory bank select register (#d) 8, respectively. First, in the main routine, "01" is set in the register bank select register 9, and processing is performed by having the memory bank "3" selected as the access memory area since the contents of the register bank (#b) 2 and the memory bank select register (#b) 6 are "11". For instance, if the data "06H" and "0CH" are set in the registers A1 and B1 of the register bank (#b) 2, respectively, and an indirect addressing instruction of these registers A1 and B1 is executed, the higher-order address generating circuit 13 outputs MA9, MA8 = 11, while the lower-order address generating circuit 12 outputs MA7 ~ MA0 = 01101100, thus access to the memory address "36CH" being enabled. Here, if the control flag generator 14 is cleared to "0" and an indirect addressing instruction of the two registers A1 and B1 is executed, the higher-order address generating circuit 13 outputs MA9, MA8 = 00, while the lower-order address generating circuit 12 outputs MA7 ~ MA0 = 01101100, thus access to the memory address "O6CH" being enabled. In brief, switching between a memory bank #n (n being 1, 2 or 3) specified by the register bank select register 9 and the memory bank "0" can be conducted only by the operation of the control flag generator 14.

Note that, in this embodiment, AND gates 15, 16 are used and the circuit accesses the memory bank "0" when the control flag generator 14 is "0", but if NAND gates are used instead of the AND grates 15, 16, the circuit can access the memory bank "3".

As the first and second embodiments assume a 4-bit microcomputer as examples, respectively, each of the registers has a 4-bit configuration, but in the case of an 8-bit microcomputer, each of the registers has an 8-bit configuration. In this case, the ranee of indirect addressing by a register pair expands from a range of 256 addresses, or, in other words address 00 to address FF to a range of 65536 addresses, or in other words address 0000 to address FFFF. For this reason, memory capacity of one bank can be expanded up to 65536 x 8 bits. Also, as the register bank select register and the memory bank select register have a 2-bit configuration, the number of banks which can be selected is 4, respectively, but if a 3-bit configuration or a 4-bit configuration is adopted, the number of banks which can be selected can be expanded to 8 banks and 16 banks, respectively. It should be noted that a bit configuration of the register bank select register may not be the same as that of the memory bank select register.

As described above, a microcomputer according to this invention has the same number of the memory bank select registers as that of register banks, and as the memory banks can be switched only by switching the register banks, when there occurs an interruption request, or when a call instruction is executed, the operations required are only the saving current contents of the register bank select register, setting the register bank select register to be used in a subroutine, and restoring the register bank register to be used in the main routine. As a result, the number of program steps can be reduced, and when an operation is repeated a number of times in a wide range of addresses, data processing time can be reduced by the memory bank switching operation. Further, if the register bank select register is mapped in the PSW, when a call instruction is executed, or when there occurs an interruption request, saving and restoring the contents of the register bank to be used in the main routine are executed automatically, so that that is required is only sitting a register bank used in the subroutine. Also, since a memory bank corresponding to one register bank can be set freely, a memory which is accessible for a branching process can be allocated freely.

While the invention has been described in its preferred embodiments, it is to be understood that the words which have been used are words of description rather than limitation and that changes within the purview of the appended claims may be made without departing from the true scope and spirit of the invention in its broader aspects.

**Claims**

1. A microcomputer characterized by comprising:
   a plurality of register banks (1,2,3,4) each being formed by a plurality of general purpose registers;
   a plurality of memory bank select registers (5,6,7,8) which expand a memory area to a plurality of memory banks ("0","1","2","3") and which select one memory bank from said plurality of memory banks, said memory bank select registers being the same in number as that of said register banks; and
   a register bank select register (9) which selects one register bank from said plurality of register banks,
   said register bank select register (9) being both for selecting one register bank from said plurality of register banks and for selecting one memory bank select register from said plurality of memory bank select registers.

2. A microcomputer according to claim 1, which further comprising a bank select circuit (10) for decoding the contents of said register bank select register (9).

3. A microcomputer according to claim 1, which further comprising a control means (14,15,16) for validating or invalidating selection of said memory bank select registers.

4. A microcomputer according to claim 3, wherein said control means includes a control flay generator (14) for issuing a control flag and a plurality of AND gates (15,16) for receiving said control flag and the contents of one memory bank select register selected by the register bank select register (9).

5.  A microcomputer according to claim 1, which comprising a higher-order address generating circuit (13) for outputting the contents of said memory bank select register (5,6,7 or 8) specified by said register bank select register (9) as high-order 2 bits (MA9,MA8) of a memory address.

6.  A microcomputer characterized by comprising:

    a plurality of register banks (1,2,3,4) each being formed by a plurality of general purpose registers;

    a plurality of memory bank select registers (5,6,7,8) which expand a memory area to a plurality of memory banks ("0"."1","2","3") and which select one memory bank from said plurality of memory banks, said memory bank select registers being the same in number as that of said register banks; and

    a bank selecting means (9,10) for selecting one register bank from said plurality of register banks (1,2,3,4) and for selecting one memory bank select register from said plurality of memory bank select registers (5,6,7,8).

7.  A microcomputer according to claim 6, wherein said bank selecting means includes a register bank select register (9) for specifying one register bank from said plurality of register banks (1,2,3,4), and a bank select circuit (10) for receiving and decoding the contents of said register bank select register (9).

# FIG.1
## PRIOR ART

BANK SELECT CIRCUIT

| A0 | B0 | C0 | D0 |
| A1 | B1 | C1 | D1 |
| A2 | B2 | C2 | D2 |
| A3 | B3 | C3 | D3 |

DATA BUS

LOWER-ORDER ADDRESS GENERATING CIRCUIT

MA7～MA0

MEMORY BANK SELECT REGISTER

HIGHER-ORDER ADDRESS GENERATING CIRCUIT

MA9 MA8

b1 b0

EP 0 463 855 A2

# F I G.2

MEMORY BANK 0

MEMORY BANK 1

MEMORY BANK 2

MEMORY BANK 3

000H
0FFH
100H
1FFH
200H
2FFH
300H
3FFH

18

# FIG.3

BANK SELECT CIRCUIT

9

| b1 | b0 |

10

1
2
3
4

| A0 | B0 | C0 | D0 |
| A1 | B1 | C1 | D1 |
| A2 | B2 | C2 | D2 |
| A3 | B3 | C3 | D3 |

11

DATA BUS

5 MEMORY BANK SELECT REGISTER #a

6 MEMORY BANK SELECT REGISTER #b

MEMORY BANK SELECT REGISTER #c

7 MEMORY BANK SELECT REGISTER #d

8

12 LOWER-ORDER ADDESS GENERATING CIRCUIT

MA7~MA0

13 HIGHER-ORDER ADDRESS GENERATING CIRCUIT

MA9  MA8

EP 0 463 855 A2

# F I G . 4

EP 0 463 855 A2

| AO | BO | CO | DO |
| A1 | B1 | C1 | D1 |
| A2 | B2 | C2 | D2 |
| A3 | B3 | C3 | D3 |

BANK SELECT CIRCUIT

DATA BUS

LOWER-ORDER ADDESS
GENERATING CIRCUIT

MA7~MA0

MEMORY BANK SELECT REGISTER #a

MEMORY BANK SELECT REGISTER #b

MEMORY BANK SELECT REGISTER #c

MEMORY BANK SELECT REGISTER #d

CONTROL FLAG
GENERATOR

HIGHER-ORDER ADDRESS
GENERATING CIRCUIT

MA9  MA8